# EUROPEAN PATENT SPECIFICATION

(11) **EP 1 352 031 B1**
(45) Date of publication and mention of the grant of the patent: **25.06.2014**
(21) Application number: 01999612.3
(22) Date of filing: 16.11.2001
(51) Int. Cl.: C08L 95/00, E01C 7/18

(54) **A BITUMEN COMPOSITION, ITS MANUFACTURE AND USE**
BITUMENZUSAMMENSETZUNG UND HERSTELLUNG UND VERWENDUNG DAVON
COMPOSITION A BASE DE BITUME, PROCEDE DE FABRICATION ET D'UTILISATION

(30) Priority: 04.12.2000 EP 00430033
(43) Date of publication of application: 15.10.2003
(73) Proprietor: BP OIL INTERNATIONAL LIMITED, Sunbury-on-Thames, Middlesex TW16 7BP (GB); BP France S.A., 95866 Cergy Pontoise Cedex (FR)
(72) Inventor: FISHER, Robert Gerald, Beckenham, Kent BR3 4LG (GB); LEROY, Guy, F-59240 Dunkerque (FR)
(74) Representative: Murray, Elisabeth Anne
(86) International application number: PCT/GB2001/005054
(87) International publication number: WO 2002/046311

(56) References cited:
- US-A- 4 781 988
- US-A- 5 695 555
- US-A- 5 743 950
- US-A- 5 910 212

## Description

The present invention relates to a bitumen composition, which is suitable for use in road construction.

Bitumen is used as a binder for aggregates in road asphalt mixtures. At high temperatures, bitumen softens, and roads constructed with asphalt may be subject to deformation or tutting, particularly, when exposed to heavy traffic. Under such conditions, a hard bitumen will resist deformation better than a soft bitumen. However, at ambient and low temperatures, hard bitumens may be brittle and crack, also leading to failure of the road. Clearly, a balance must be made in selecting the optimum bitumen for a particular application and area. This balance is usually achieved by careful selection of the hardness of the bitumen and the susceptibility of its hardness to changes in temperature (i.e. its temperature susceptibility).

Bitumens are typically characterised according to their penetration at 25°C (i.e. hardness), measured in mm/10 and their softening point (°C). Harder bitumens have lower penetrations than soft bitumens. Softening points are higher for harder bitumens.

A parameter known as penetration index (PI) is often used to describe the relationship between penetration and softening point (see European Standard EN 12591 (1999) Bitumen and Bituminous Binders - Specifications for paving grade bitumens, Annex B). PI provides an indication of how the hardness of a bitumen changes with temperature, i.e. its temperature susceptibility. A higher PI denotes a lower temperature susceptibility. Bitumens for roads typically have PI values in the range -1 to +1 while bitumens for roofs typically have PI values of +3 to +7. Although roofing bitumens have high PIs they are generally unsuitable for roads due to their very high viscosity at asphalt
mixing and laying temperatures (typically 100-180C) which reduces the workability and ease of compaction of the hot asphalt mix at the road construction stage. High PI bitumens also tend to be slightly rubbery i.e. have elastic characteristics, which can often mean that minor cracks in a pavement, induced by heavy traffic, may not self-heal, which can be the case with normal road bitumens of lower PI. Also, high PI bitumens are more susceptible to oxidative hardening due to their chemical nature.

Bitumens may be produced by the distillation of crude oil residues. Different grades of bitumen (i.e. bitumens of different hardness and softening point) can be produced by removing different amounts of the lighter components of the residues in the distillation process. The greater the amount of lighter components removed, the harder the bitumen produced. A similar hardening effect can be achieved by blowing air through the residues at temperatures of 180-300°C. Bitumens produced in this way are called blown or air blown bitumens. As is well known in the industry, additives such as phosphoric acid or ferric chloride, may be optionally used in the blowing process.

US 5695555 relates to paving asphalts and in one aspect to a method of modifying as asphalt so as to increase the temperature range over which the asphalt may be used. US 5910212 relates to a process for preparing an asphalt composition. US 5743950 relates to a process for preparing an asphalt composition for road applications. US 4781988 relates to a corrosion-resistant coating for a ferrous surface comprising an asphaltic matrix.

We have now found that it is possible to produce a bitumen composition having improved physical properties by blending a solvent precipitated asphalt with blown bitumen.

Accordingly, the present invention provides a bitumen composition suitable for use in road construction characterised in that the composition has a softening point of 50 to 75 °C and comprises:
a) a blown bitumen having a penetration at 25 °C of 10 to 50 mm/10, a softening point of 70 to 120 °C and a PI (European Standard EN 12591 (1999), Annex B) in the range 1.0 to 8.5, and
b) a solvent precipitated asphalt having a penetration at 25 °C of 0 to 40 mm/10.

Also, according to the present invention there is provided a process for manufacturing a bitumen composition which comprises blending a blown bitumen having a penetration at 25 °C of 10 to 50 mm/10, a softening point of 70 to 120 °C and a PI (European Standard EN 12591 (1999), Annex B) in the range 1.0 to 8.5, and a solvent precipitated asphalt having a penetration at 25 °C of 0 to 40 mm/10.

The bitumen compositions of the present invention have been found to exhibit the qualities of a hard bitumen i.e. increased resistance to permanent deformation at high road temperatures, but surprisingly they have been found to exhibit good resistance to cracking, both at low temperatures and in fatigue. In addition, they have the good durability of solvent precipitated asphalts and also have sufficiently low viscosity to enable them to be used in workable asphalt mixes for road applications.

The blown bitumen present in the bitumen composition may be produced by a normal blowing process. Alternatively, the blown bitumen may be produced by a blowing process in which a blowing additive, such as phosphoric acid, is used (hereinafter also referred to as a catalytically blown bitumen). The blown bitumen produced has a penetration of 10 to 50 mm/10, a softening point of 70 to 120°C and a PI in the range 1.0 to 8.5, more preferably in the range 1.0 to 7.5.

The solvent precipitated asphalt has a penetration of 0 to 40 mm/10, preferably, 0 to 15 mm/10, more preferably, 5 to 15 mm/10. The softening point of the solvent precipitated asphalt is 50 to 100°C, preferably, 60 to 75°C, more preferably, 60 to 70°C. The PI of the solvent precipitated asphalt is less than zero.

The solvent precipitated asphalt may be a crude fraction which has been precipitated from crude oil, crude oil fractions or preferably, residues from the vacuum distillation of crude oil, using an aliphatic hydrocarbon solvent having 2 to 6 carbon atoms. Preferably, the aliphatic hydrocarbon solvent is an alkane, comprising, for example, 3 to 5 carbon atoms. Suitable alkanes include propane, butane and pentane. More preferably, the solvent precipitated asphalt is a propane precipitated asphalt (PPA). In a preferred embodiment, the solvent precipitated asphalt is a PPA having a penetration of 5 to 15 and a softening point of 60 to 70°C.

The bitumen composition of the present invention may have a penetration of 5 to 50 mm/10, preferably, 10 to 50 mm/10. The softening point of the bitumen composition is 50 to 75°C, preferably, 55 to 75°C.

The bitumen composition of the present invention may comprise a major proportion of the blown bitumen and a minor proportion of the solvent precipitated asphalt. For example, the bitumen composition may comprise from 50 to 99%, preferably, 60 to 85 % of the blown bitumen and from 1 to 50%, preferably, 15 to 40% of the solvent precipitated asphalt.

Alternatively, the bitumen composition of the present invention may comprise a minor proportion of the blown bitumen and a major proportion of the solvent precipitated asphalt.

The bitumen composition of the present invention may comprise from 40 to 99 %, preferably from 40 to 90%, more preferably, 45 to 85 % of the blown bitumen. The bitumen composition of the present invention may comprise from 10 to 60%, preferably, 15 to 55% of the solvent precipitated asphalt.

In a further alternative, the bitumen composition of the present invention comprises substantially equal amounts of the bitumen and solvent precipitated asphalt. For example, the bitumen composition comprises 50% bitumen and 50% solvent precipitated asphalt.

The invention will now be illustrated by way of example only and with reference to three embodiments (A-C).

Embodiment A of the present invention is a bitumen composition comprising 65 to 75% (e.g. 70%) blown bitumen, and 25 to 35% (e.g. 30%) solvent precipitated asphalt. The blown bitumen employed in this embodiment is preferably a bitumen having a penetration of 15 to 30 mm/10, a softening point of 75 to 90°C and a PI of 1.0 to 4.5. The solvent precipitated asphalt employed in this embodiment is preferably PPA having a penetration of 5 to 15 mm/10, a softening point of 60 to 70°C and a PI of less than zero. The bitumen composition of Embodiment A preferably has a penetration of 10 to 25 mm/10 and a softening point of 60 to 75°C.

Embodiment B of the present invention is a bitumen composition comprising 65% blown bitumen (e.g. using phosphoric acid) and 35% solvent precipitated asphalt. The blown bitumen employed in this embodiment may be catalytically blown but is preferably one having a penetration of 30 to 50 mm/10 (e.g. 40 mm/10) and a softening point of 95 to 105°C (e.g. 100°C). The solvent precipitated asphalt employed in this embodiment is preferably PPA having a penetration of 5 to 15 mm/10, a softening point of 60 to 70°C and a PI of less than zero. The bitumen composition of Embodiment B preferably has a penetration of 40 to 50 mm/10, a softening point of 55 to 65 °C.

Embodiment C of the present invention is a bitumen composition comprising 70 to 80% (e.g. 75%) of a blown bitumen and 20 to 30% (e.g. 25%) solvent precipitated asphalt. The blown bitumen employed in this embodiment may be catalytically blown but is preferably a bitumen having a penetration of 20 to 30 mm/10 (e.g. 25 mm/10) and a softening point of 80 to 90°C (e.g. 85°C). The solvent precipitated asphalt employed in this embodiment is preferably PPA having a penetration of 5 to 15 mm/10, a softening point of 60 to 70°C and a PI of less than zero. The bitumen composition of Embodiment C preferably has a penetration of 20 to 35 mm/10 and a softening point of 60 to 75°C.

The bitumen composition of the present invention may further comprise one or more conventional additives. Preferably, the bitumen composition further comprises a modifier such as a thermoplastic polymer. Suitable thermoplastic polymers include polyethylene, polyisobutylene, polypropylene, polyvinyl chloride, polystyrene and ethylene vinyl acetate (EVA) used pure or in a mixture of one or more of them.

The bitumen compositions of the present invention are particularly useful as binders for aggregates. The resulting bituminous asphalts are useful for making roads, vehicle parks and the like.

These and other aspects of the present invention will now be described with reference to the following examples.

### Example 1 (Embodiment A)

A hard blown bitumen, produced by blowing air through a 250-600 mm/10 penetration Arab Light vacuum residue at 270°C, was blended at 180°C with a propane precipitated asphalt derived from the same vacuum residue. The properties of the two blend components, the proportions used and the properties of the final blend are shown below:

| | **Hard blown bitumen** | **Propane precipitated asphalt (PPA)** | **Blend 70% blown bitumen 30% PPA** |
|---|---|---|---|
| Pen | 20 | 10 | 20 |
| Soft. Pt. | 81.6 | 64.6 | 69.4 |
| PI | +2.4 | -1.2 | +0.7 |

Properties of the blended bitumen are compared below with those of a conventional 20/30 penetration grade :

| | Blended bitumen | 20/30 conventional grade |
|---|---|---|
| Penetration at 25°C (mm/10) | 20 | 26 |
| Softening point (°C) | 69.4 | 57.0 |
| Fraass Breaking Point (°C) | -5 | -7 |
| Plasticity interval (°C) | 74.4 | 64.0 |

It can be seen that the plasticity interval (the softening point minus the Fraass Breaking or brittle point) is significantly greater than the conventional 20/30 grade, denoting a wider working range for the blended bitumen under service conditions.

### Example 2 (Embodiment A)

A blended bitumen according to the present invention was again prepared using the route described in example 1. Properties of the blended bitumen were compared with those of a commercially available 15/25 penetration bitumen :

| | Blended bitumen | Commercial 15/25 bitumen |
|---|---|---|
| Penetration at 25°C (mm/10) | 20 | 20 |
| Softening point (°C) | 66.4 | 59.6 |
| Penetration Index | +0.2 | -1.0 |

Both bitumens were subjected to the Rolling Thin Film Oven (RTFO) procedure (ASTM method D2572) where after they were further aged in a Pressure Ageing Vessel (AASHTO PP1). The rheological properties of the both bitumens were then measured before and after these ageing procedures :

| | Blended bitumen | Commercial 15/25 bitumen |
|---|---|---|
| **Before RTFO/PAV :** | | |
| Temperature for G*/sinδ=1kPa, °C | 87 | 80 |

| **After RTFO :** | | |
|---|---|---|
| Temperature for G*/sinδ=2.2kPa, °C | 89 | 79 |

| **After RTFO/PAV :** | | |
|---|---|---|
| Temperature at which stiffness = 300MPa, °C | -12 | -6 |

The above results clearly show that the blended bitumen prepared in accordance with this invention 1) displays a superior rutting resistance by virtue of its higher stiffness at high temperatures and 2) a superior low temperature performance by virtue of its lower stiffness at low road temperatures.

### Example 3 (Embodiment A)

A blended bitumen was again prepared using the route described in example 1. Properties of the blended bitumen were compared with those of a commercially available conventional 20/30 penetration bitumen :

| | Blended bitumen | Conventional 20/30 bitumen |
|---|---|---|
| Penetration at 25°C (mm/10) | 21 | 22 |
| Softening point (°C) | 69.0 | 58.0 |
| Penetration Index | +0.7 | -1.1 |

The blended bitumen was also tested in a '0/10 Beton Bitumineux Semi Grenu' (BBSG) asphalt mixture according to the French specification wheel tracking procedure at 60°C and the results compared with those from the same mix produced with the conventional 20/30 penetration conventional bitumen. The aggregate grading of the asphalt mixtures were as follows :

| Sieve size (mm) | % wt passing |
|---|---|
| 12.5 | 100 |
| 10 | 94-95 |
| 8 | 81-82 |
| 6.3 | 65-66 |
| 4 | 45-51 |
| 2 | 34-36 |
| 0.315 | 14-15 |
| 0.08 | 8-10 |

A bitumen content of 5.7 ppc (parts by weight per 100 parts by weight aggregate) was used for both asphalt mixtures.

The table below summarises the wheel tracking and fatigue results :

| | BBSG with the blended bitumen | BBSG with 20/30 conventional bitumen |
|---|---|---|
| % Rut at | | |
| 30 cycles | 1.3 | 1.6 |
| 100 cycles | 1.6 | 2.0 |
| 1000 cycles | 1.8 | 2.4 |
| 3000 cycles | 2.2 | 3.1 |
| 10000 cycles | 2.5 | 3.6 |
| 30000 cycles | 2.9 | 4.3 |
| 100000 cycles | 3.2 | 4.9 |
| | | |
| Fatigue resistance at 10°C : | | |
| | | |
| Strain for 10⁶ cycles to failure | 151 | 104 |

These wheel tracking and fatigue results demonstrate the superior resistance to rutting and to fatigue of the BBSG containing the blended bitumen of this invention

### Example 4 (Embodiment A)

The blended bitumen according to the present invention was also compared with the commercially available 15/25 bitumen from example 2 and a conventional 20/30 bitumen of slightly different properties to that used in example 3 in 0/14 'Enrobe à Module Eleve' (EME) asphalt mixtures. Testing according to French asphalt mixture test procedures for wheel tracking at 60°C and fatigue resistance was carried out. The aggregate grading of the EME asphalt mixtures were as follows :

| Sieve size (mm) | % wt passing |
|---|---|
| 20 | 100 |
| 16 | 99-100 |
| 12.5 | 91-93 |
| 10 | 78-79 |
| 8 | 67-69 |
| 6.3 | 58-60 |
| 4 | 40-47 |
| 2 | 32-34 |
| 0.315 | 12-15 |
| 0.08 | 6-8 |

A bitumen content of 5.5 ppc (parts by weight per 100 parts by weight aggregate) was used for all three asphalt mixtures.

The table below summarises the bitumen properties, wheel tracking and fatigue testing results :

| | EME with the blended bitumen | EME with 20/30 conventional bitumen | EME with 15/25 conventional bitumen |
|---|---|---|---|
| Penetration at 25°C mm/10 | 21 | 19 | 20 |
| Softening point °C | 69.0 | 63.0 | 59.6 |
| Penetration Index | +0.7 | -0.4 | -1.1 |
| % Rut at | | | |
| 30 cycles | | | |
| 100 cycles | 0.9 | 1.3 | 1.6 |
| 300 cycles | 1.3 | 1.8 | 2.1 |
| 1000 cycles | 1.7 | 2.4 | 2.7 |
| 3000 cycles | 2.0 | 2.9 | 3.4 |
| 10000 cycles | 2.7 | 3.5 | 4.1 |
| 30000cycles | 3.3 | 4.1 | 5.0 |
| | 3.8 | 4.5 | 5.7 |
| Fatigue resistance at 10°C : | | | |
| | | | |
| Strain for 10⁶ cycles to failure | 146 | 118 | 108 |

These results clearly show the improved resistance to rutting at high road temperatures and the improved resistance to fatigue cracking of the blended bitumen of the current invention.

### Example 5 (Embodiment B)

A high PI catalytically blown bitumen was blended at 180°C with a propane precipitated asphalt derived from the same vacuum residue as in example 1. The properties of the two blend components, the proportions used and the properties of the final blends are shown below :

| | High PI catalytically blown bitumen | Propane precipitated asphalt (PPA) | Blend 65% blown bitumen 35% PPA |
|---|---|---|---|
| Pen | 38 | 14 | 47 |
| Soft. Pt. | 103.0 | 63.0 | 62 |
| PI | +6.2 | -0.9 | +1.3 |

### Example 6 (Embodiment C)

A high PI catalytically blown bitumen was blended at 180°C with a propane precipitated asphalt derived from the same vacuum residue as in example 1. The properties of the two blend components, the proportions used and the properties of the final blend are shown below :

| | High PI catalytically blown bitumen | Propane precipitated asphalt (PPA) | Blend 75% blown bitumen 25% PPA |
|---|---|---|---|
| Pen | 28 | 14 | 31 |
| Soft. Pt. | 85.6 | 63.0 | 65.6 |
| PI | +3.7 | -0.9 | +1.0 |

The blended bitumen was then graded according to the SHRP methodology and specifications and compared with a conventional 20/30 grade bitumen :

| | Blended bitumen | 20/30 |
|---|---|---|
| | | |
| Pen @25°C (mm/10) | 31 | 29 |
| Softening Pt. (°C) | 65.6 | 55.4 |
| | | |
| Performance Grade (High Temperature) | 82 | 70 |
| | | |
| Performance Grade (Low Temperature) | -16 | -10 |
| | | |
| Final SHRP Performance Grade (PG) | PG 82-16 | PG 70-10 |

From the results in the foregoing table it can be seen that the blended bitumen of this invention has superior performance at both higher and lower temperatures compared to a conventional bitumen of the same penetration grade.

## Claims

1. A bitumen composition suitable for use in road construction **characterised in that** the composition has a softening point of 50 to 75°C and comprises:
a) a blown bitumen having a penetration at 25 °C of 10 to 50 mm/10, a softening point of 70 to 120°C and a PI (European Standard EN 12591 (1999), Annex B) in the range 1.0 to 8.5, and
b) a solvent precipitated asphalt having a penetration at 25 °C of 0 to 40 mm/10.

2. A composition as claimed in claim 1 in which the blown bitumen is produced by a blowing process in which a blowing additive is used.

3. A composition as claimed in claim 2 in which the blowing additive comprises phosphoric acid.

4. A composition as claimed in any one of the preceding claims in which the blown bitumen has a PI (European Standard EN 12591 (1999), Annex B) in the range 1.0 to 7.5.

5. A composition as claimed in any one of the preceding claims in which the solvent precipitated asphalt has a penetration at 25 °C of 0 to 15 mm/10.

6. A composition as claimed in claim 5 in which the solvent precipitated asphalt has a penetration at 25 °C of 5 to 15 mm/10.

7. A composition as claimed in any one of the preceding claims in which the solvent precipitated asphalt has a softening point of 50 to 100°C.

8. A composition as claimed in claim 7 in which the solvent precipitated asphalt has a softening point of 60 to 75°C.

9. A composition as claimed in claim7 in which the solvent precipitated asphalt has a softening point of 60 to 70°C.

10. A composition as claimed in any one of the preceding claims in which the solvent precipitated asphalt has a PI (European Standard EN 12591 (1999), Annex B) of less than zero.

11. A composition as claimed in any one of the preceding claims in which the solvent precipitated asphalt is a propane precipitated asphalt (PPA).

12. A composition as claimed in claim 11 in which the PPA has a penetration at 25 °C of 5 to 15 mm/10 and a softening point of 60 to 70°C.

13. A composition as claimed in any one of the preceding claims comprising from 50 to 99% of the blown bitumen.

14. A composition as claimed in claim 13 comprising 60 to 85 % of the blown bitumen.

15. A composition as claimed in any one of claims 1 to 12 comprising substantially equal amounts of the bitumen and solvent precipitated asphalt.

16. A process for manufacturing a bitumen composition as claimed in any one of claims 1 to 15 which comprises blending a blown bitumen having a penetration at 25 °C of 10 to 50 mm/10, a softening point of 70 to 120°C and a PI (European Standard EN 12591 (1999), Annex B) in the range 1.0 to 8.5, and a solvent precipitated asphalt having a penetration of 0 to 40 mm/10.

17. The use of a bitumen composition as claimed in any one of claims 1 to 15 or as manufactured by a process as claimed in claim 16 as a binder for aggregates.

18. The use as claimed in claim 17 in which the resulting bitumous asphalt is used for making roads or vehicle parks.

## Patentansprüche

1. Bitumenzusammensetzung, die zur Verwendung im Straßenbau geeignet ist, **dadurch gekennzeichnet, dass** die Zusammensetzung einen Erweichungspunkt von 50 bis 75 °C hat und umfasst:
a) Blasbitumen mit einer Penetration bei 25 °C von 10 bis 50 mm/10, einem Erweichungspunkt von 70 bis 120 °C und einem PI (European Standard EN 12591 (1999), Anlage B) im Bereich von 1,0 bis 8,5, und
b) einen Lösungsmittel-gefällten Asphalt mit einer Penetration bei 25 °C von 0 bis 40 mm/10.

2. Zusammensetzung nach Anspruch 1, wobei das Blasbitumen mittels eines Blasverfahrens hergestellt wird, bei dem ein Blähadditiv verwendet wird.

3. Zusammensetzung nach Anspruch 2, wobei das Blähadditiv Phosphorsäure umfasst.

4. Zusammensetzung nach einem der vorhergehenden Ansprüche, wobei das Blasbitumen einen PI (European Standard EN 12591 (1999), Anlage B) im Bereich von 1,0 bis 7,5 hat.

5. Zusammensetzung nach einem der vorhergehenden Ansprüche, wobei der Lösungsmittel-gefällte Asphalt eine Penetration bei 25 °C von 0 bis 15 mm/10 aufweist.

6. Zusammensetzung nach Anspruch 5, wobei der Lösungsmittel-gefällte Asphalt eine Penetration bei 25 °C von 5 bis 15 mm/10 aufweist.

7. Zusammensetzung nach einem der vorhergehenden Ansprüche, wobei der Lösungsmittel-gefällte Asphalt einen Erweichungspunkt von 50 bis 100 °C aufweist.

8. Zusammensetzung nach Anspruch 7, wobei der Lösungsmittel-gefällte Asphalt einen Erweichungspunkt von 60 bis 75 °C aufweist.

9. Zusammensetzung nach Anspruch 7, wobei der Lösungsmittel-gefällte Asphalt einen Erweichungspunkt von 60 bis 70 °C aufweist.

10. Zusammensetzung nach einem der vorhergehenden Ansprüche, wobei der Lösungsmittel-gefällte Asphalt einen PI (European Standard EN 12591 (1999), Anlage B) von weniger als null hat.

11. Zusammensetzung nach einem der vorhergehenden Ansprüche, wobei der Lösungsmittel-gefällte Asphalt ein Propan-gefällter Asphalt (PPA) ist.

12. Zusammensetzung nach Anspruch 11, wobei der PPA eine Penetration bei 25 °C von 5 bis 15 mm/10 und einen Erweichungspunkt von 60 bis 70 °C aufweist.

13. Zusammensetzung nach einem der vorhergehenden Ansprüche, umfassend 50 bis 99 % Blasbitumen.

14. Zusammensetzung nach Anspruch 13, umfassend 60 bis 85 % Blasbitumen.

15. Zusammensetzung nach einem der Ansprüche 1 bis 12, umfassend im Wesentlichen gleiche Mengen an Bitumen und Lösungsmittel-gefälltem Asphalt.

16. Verfahren zur Herstellung einer Bitumenzusammensetzung nach einem der Ansprüche 1 bis 15, welches das Mischen eines Blasbitumens mit einer Penetration bei 25 °C von 10 bis 50 mm/10, einem Erweichungspunkt von 70 bis 120 °C und einem PI (European Standard EN 12591 (1999), Anlage B) im Bereich von 1,0 bis 8,5, und eines Lösungsmittel-gefällten Asphalts mit einer Penetration von 0 bis 40 mm/10 umfasst.

17. Verwendung einer Bitumenzusammensetzung nach einem der Ansprüche 1 bis 15 oder wie durch das Verfahren nach Anspruch 16 hergestellt als Bindemittel für Aggregate.

18. Verwendung nach Anspruch 17, wobei der resultierende Bitumenasphalt zur Fertigung von Straßen oder Fahrzeugparks verwendet wird.

## Revendications

1. Composition à base de bitume adaptée à l'utilisation dans la construction de routes **caractérisée en ce que** la composition a un point de ramollissement de 50 à 75 °C et comprend :
a) un bitume soufflé ayant une pénétration à 25 °C de 10 à 50 mm/10, un point de ramollissement de 70 à 120 °C et un PI (Norme européenne EN 12591 (1999), Annexe B) dans la plage de 1,0 à 8,5, et
b) un asphalte précipité dans un solvant ayant une pénétration à 25 °C de 0 à 40 mm/10.

2. Composition selon la revendication 1 dans laquelle le bitume soufflé est produit par un procédé de soufflage dans lequel un additif de soufflage est utilisé.

3. Composition selon la revendication 2 dans laquelle l'additif de soufflage comprend de l'acide phosphorique.

4. Composition selon l'une quelconque des revendications précédentes dans laquelle le bitume soufflé a un PI (Norme européenne EN 12591 (1999), Annexe B) dans la plage de 1,0 à 7,5.

5. Composition selon l'une quelconque des revendications précédentes dans laquelle l'asphalte précipité dans un solvant a une pénétration à 25 °C de 0 à 15 mm/10.

6. Composition selon la revendication 5 dans laquelle l'asphalte précipité dans un solvant a une pénétration à 25 °C de 5 à 15 mm/10.

7. Composition selon l'une quelconque des revendications précédentes dans laquelle l'asphalte précipité dans un solvant a un point de ramollissement de 50 à 100 °C.

8. Composition selon la revendication 7 dans laquelle l'asphalte précipité dans un solvant a un point de ramollissement de 60 à 75 °C.

9. Composition selon la revendication 7 dans laquelle l'asphalte précipité dans un solvant a un point de ramollissement de 60 à 70 °C.

10. Composition selon l'une quelconque des revendications précédentes dans laquelle l'asphalte précipité dans un solvant a un PI (Norme européenne EN 12591 (1999), Annexe B) inférieur à zéro.

11. Composition selon l'une quelconque des revendications précédentes dans laquelle l'asphalte précipité dans un solvant est de asphalte précipité dans du propane (APP).

12. Composition selon la revendication 11 dans laquelle l'APP a une pénétration à 25 °C de 5 à 15 mm/10 et un point de ramollissement de 60 à 70 °C.

13. Composition selon l'une quelconque des revendications précédentes comprenant de 50 à 99 % de bitume soufflé.

14. Composition selon la revendication 13 comprenant de 60 à 85 % de bitume soufflé.

15. Composition selon l'une quelconque des revendications 1 à 12 comprenant des quantités sensiblement égales de bitume et d'asphalte précipité dans un solvant.

16. Procédé de fabrication d'une composition à base de bitume telle que revendiquée dans l'une quelconque des revendications 1 à 15 qui comprend le mélange d'un bitume soufflé ayant une pénétration à 25 °C de 10 à 50 mm/10, un point de ramollissement de 70 à 120 °C et un PI (Norme européenne EN 12591 (1999), Annexe B) dans la plage de 1,0 à 8,5, et un asphalte précipité dans un solvant ayant une pénétration de 0 à 40 mm/10.

17. Utilisation d'une composition à base de bitume telle que revendiquée dans l'une quelconque des revendications 1 à 15 ou telle que fabriquée par un procédé tel que revendiqué dans la revendication 16 en tant que liant pour des agrégats.

18. Utilisation selon la revendication 17 dans laquelle l'asphalte bitumineux résultant est utilisé pour construire des routes ou des parkings.
